# EUROPEAN PATENT SPECIFICATION

(11) **EP 0 342 847 B1**
(45) Date of publication and mention of the grant of the patent: **14.07.1993**
(21) Application number: 89304690.4
(22) Date of filing: 09.05.1989
(51) Int. Cl.: G01M 11/00

(54) **Apparatus for measuring dispersion characteristics of an optical fiber**
Gerät zur Messung der Dispersion einer optischen Faser
Appareil de mesure des caractéristiques de dispersion d'une fibre optique

(30) Priority: 18.05.1988 JP 119267/88
(43) Date of publication of application: 23.11.1989
(73) Proprietor: KOKUSAI DENSHIN DENWA CO., LTD, Shinjuku-ku Tokyo 163 (JP)
(72) Inventor: Ryu, Shiro, Yokohama-shi Kanagawa-ken (JP); Mochizuki, Kiyofumi, Hachioji-shi Tokyo (JP); Horiuchi, Yukio, Hiratsuka-shi Kanagawa-ken (JP)
(74) Representative: Higgins, Michael Roger

(56) References cited:
- GB-A- 2 183 823
- REVIEW OF SCIENTIFIC INSTRUMENTS, vol. 50, no. 3, March 1979, pages 343-346, American Institute of Physics, New York, US; A. SUGIMURA et al.: "Wavelength dispersion of optical fibers directly measured by "difference method" in the 0.8-1.6 mum range"
- OPTICS LETTERS, vol. 11, no. 5, May 1986, pages 330-332, New York, US; T. KANADA et al.: "Single-mode fiber dispersion measurements using optical sampling with a mode-locked laser diode"
- PATENT ABSTRACTS OF JAPAN, vol. 9, no. 308 (P-410)[2031], 4th December 1985; & JP-A-60 140 136 (KOKUSAI DENSHIN DENWA K.K.) 25-07-1985

## Description

The present invention relates to apparatus for measuring dispersion characteristics of an optical fibre.

Since a laser which is a light source for emitting a light signal to be transmitted through an optical fibre for communication has a widely-spread frequency spectrum and the optical fibre has dispersion characteristics, the waveform of the light signal transmitted through the optical fibre from one to the other end thereof has a distortion even if the proper light signal is fed into the optical fibre at the transmitter end thereof. For that reason, there is a problem that the light signal is not received well at the receiver end of the optical fibre. Therefore, it is necessary to know the dispersion characteristics of the optical fibre in designing an optical communication system employing the optical fibre. Various measurement circuits for measuring dispersion characteristics of optical fibres have been developed.

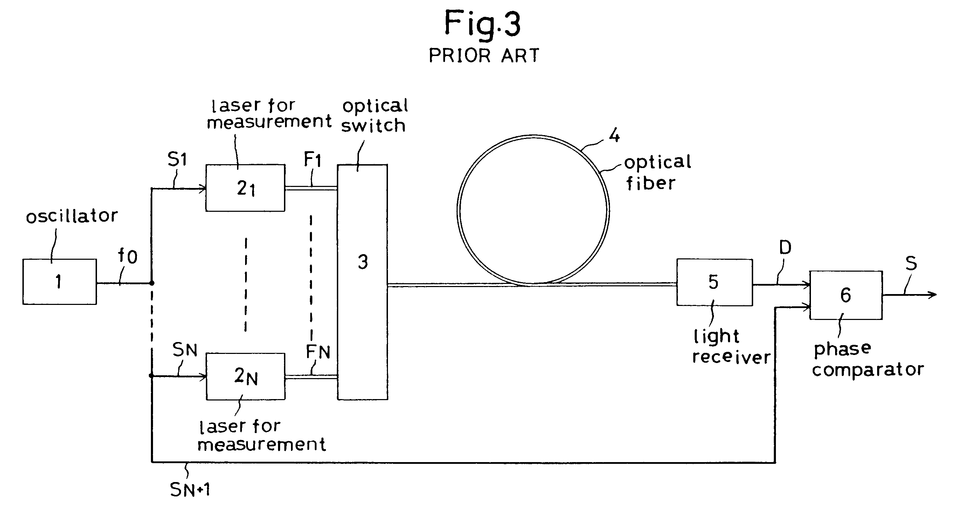

Figure 3 shows a block diagram of a conventional measurement circuit such as is disclosed in "Comparison of single mode fiber dispersion measurement techniques, Journal of Lightwave Technology, Vol. LT-3, No. 5, October 1985" and "Chromatic dispersion measurement over a 100km dispersion shifted single-mode fibre by a new phase-shift technique, ELECTRONICS LETTERS, 22nd May 1986, Vol 22 No. 11 pp570-572". Shown in Figure 3 are an oscillator 1 for supplying electrical modulation signals S₁, S₂,.... and S_{N} to measurement lasers 2₁, 2₂,.... and 2_{N} and an electric reference signal S_{N+1} for a phase comparator 6, the measurement lasers which emit N light signals of different wavelengths in wavelength bands for measurement, an optical switch 3 for sequentially changing over the output light signals for N numbers of measurement lasers 2₁, 2₂,...2_{N}, the optical fibre 4 to be measured, a light receiver 5 by which an intensity-modulated light signal exiting from the optical fibre 4 is converted into a demodulated electrical signal D, the phase comparator 6 for detecting the phase difference between the demodulated electrical signal D and the reference electrical signal S_{N+1}, output signal S corresponding to the difference, and optical fibres F₁, F₂,... and F_{N}. The output light signals from the measurement lasers 2₁, 2₂,... and 2_{N} are subjected to intensity modulation based on the modulation frequency f_{O} of the oscillator 1, and are then sent to the optical fibre 4 through the other optical fibres F₁, F₂,... and F_{N} and the optical switch 3 so that the light signals enter one after another into the optical fibre 4. The light receiver 5 sequentially receives the light signals transmitted through the optical fibre 4 and converts the signals into the electrical signals S₁, S₂,... and S_{N} which are the demodulated electrical signals D. The phase differences between the reference electrical signal S_{N+1} and the demodulated electrical signals D are sequentially detected by the phase comparator 6 to measure the dispersion characteristics of the optical fibre 4. However, since the light signals and the reference electrical signal S_{N+1} are transmitted through mutually different media to perform the measurement as shown in Figure 3, the fluctuation in the phases of the demodulated electrical signals D, which is caused when the optical fibre 4 to be measured expands or contracts due to a change in temperature of the like, cannot be prevented from affecting the result of the measurement. This is a problem.

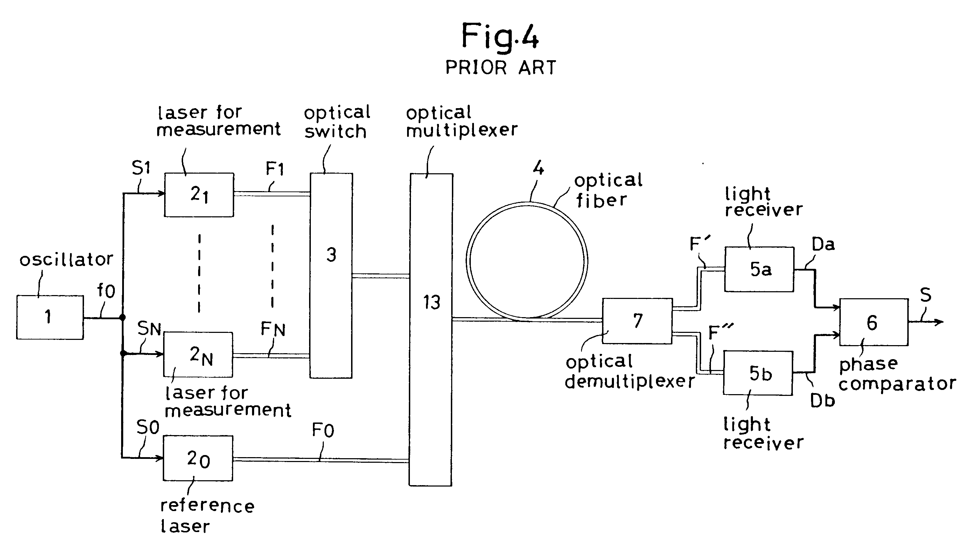

Figure 4 shows a block diagram of another known measurement circuit similar to that disclosed in JP-A-60 140136 and in an article entitled "Wavelength dispersion of optical fibres directly measured by difference method in the 0.8 - 1.6 µm range, Review of Scientific Instruments, vol. 50, No. 3, March 1979, page 343-346". In the circuit of Figure 4, an optical reference signal and measuring light signals are transmitted through the optical fibre 4. A light signal generated by a reference laser 2_{O} and having a wavelength of 1.3µm, which is nearly equal to the zero-dispersion wavelength of the optical fibre 4, is modulated at a frequency f_{O} so that the optical reference signal is obtained. Light signals generated by measurement lasers 2₁, 2₂,... and 2_{N} are modulated at the frequency f_{O} so that the measuring light signals are obtained. The measuring light signals are sequentially sent to an optical multiplexer 13 through an optical switch 3 so that each of the signals is multiplexed with the optical reference signal by the multiplexer 13, the output light signal from which is transmitted through the optical fibre 4 and received by an optical demultiplexer 7 which demultiplexes the received light signal into the optical reference signal and the measuring light signal which are converted into demodulated electrical signals Da and Db by light receivers 5a and 5b, respectively. Since the wavelength of the output light signal from the reference laser 2_{O} is nearly equal to the zero-dispersion wavelength of the optical fibre 4, the signal is hardly affected by the dispersion characteristics of the fibre. The output light signals from both the reference laser 2_{O} and the measurement lasers 2₁, 2₂,...2_{N} are equally affected by the expansion and contraction of the optical fibre 4. The demodulated electrical signals Da and Db are differentially multiplexed with each other by a phase comparator 6. As a result, the dispersion characteristics of the optical fibre 4 can be measured without being affected by the expansion and contraction of the fibre. However, since direct modulation is performed for the reference laser 2_{O} and the measurement lasers 2₁, 2₂,... and 2_{N}, a spectral spread, which is affected by the dispersion characteristics of the optical fibre 4, is caused. For that reason, it is difficult for the dispersion characteristics of the fibre 4 to be measured with a high resolution. This is a problem. Although the wavelengths of the output light signals from the measurement lasers 2₁, 2₂,... and 2_{N} are separately measured in advance to determine the dispersion characteristics of the optical fibre 4 on the basis of the measured wavelengths, the wavelengths change due to ambient conditions such as temperature so that it is difficult to accurately measure the wavelengths. For that reason, there is another problem that the influence of the dispersion characteristics of the optical fibre 4 cannot be accurately compensated by using a dispersion compensation circuit having a property inverse to the dispersion characteristics of the fibre in the intermediate frequency band or the baseband.

It is also known to measure dispersion by passing a variable wavelength signal and a fixed reference signal through an optical fibre under test from an article entitled "Single-mode fiber dispersion measurements using optical sampling with mode-locked laser diode", Optics Letters, vol.11, no. 5, May 1986, pages 330-332.

The present invention sets out to overcome the abovementioned problems.

Accordingly, it is an object of the present invention to provide apparatus in which the dispersion characteristics of an optical fibre can be accurately measured with a high resolution.

The invention is set out in a first aspect in claim 1, and in a second aspect in claim 2.

A semiconductor laser such as a distributed feedback semiconductor laser or a distributed reflector semiconductor laser, which is good in single longitudinal mode oscillation and has a narrow spectral linewidth, can be used as a light source. The wavelength of the output light signal from the laser can be adjusted. Besides, an external modulator is used for optical intensity modulation. Consequently, the spectral spread of the output light signal from the semiconductor laser unit is suppressed. The wavelength of the output signal from the laser is measured by a monitoring system employing optical heterodyne detection. As a result, the dispersion characteristics of the optical fibre can be accurately measured with high resolution. For that reason, the present invention can be widely applied to the design of a dispersion compensation circuit for coherent light communication or to the like.

The invention will now be more particularly described, by way of example, with reference to the accompanying drawings, in which:-
Figure 1 is a block diagram of one embodiment of optical fibre dispersion characteristics measurement apparatus, according to the invention,
Figure 2 is a block diagram of another emodiment of optical fibre dispersion characteristics measurement apparatus, according to the invention,
Figure 3 is a block diagram of a conventional optical fibre dispersion characteristics measurement apparatus; and
Figure 4 is a block diagram of another conventional optical fibre dispersion characteristics measurement apparatus which is not affected by the expansion and contraction of a measured optical fibre.

Embodiments of the present invention are hereafter described in detail with reference to the drawings attached hereto.

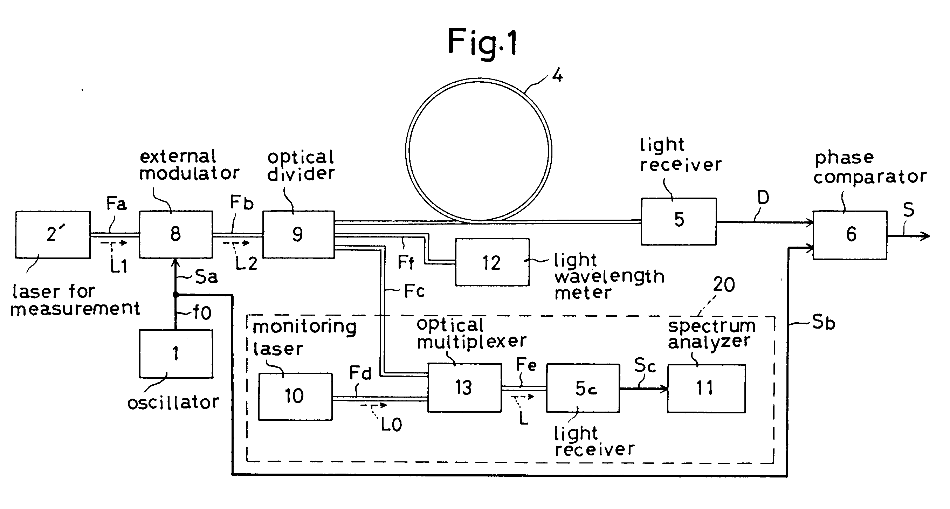

Figure 1 shows a block diagram of measurement apparatus of the dispersion characteristics of an optical fibre 4. The apparatus is one embodiment of the invention . In the apparatus an oscillator 1, a laser for measurement 2', light receivers 5 and 5c, a phase comparator 6, an external modulator 8, an optical divider 9, a laser for monitoring 10, a spectrum analyzer 11, a light wavelength meter 12, an optical multiplexer 13 and optical fibers Fc, Fd, Fe and Ff are disposed. The laser for measurement 2' is a distributed feedback semiconductor laser or a distributed reflector semiconductor laser. The external modulator 8 and an electrical modulation signal Sa supplied from the oscillator 1 act together so that a measuring light signal L₁ emitted from the laser for measurement 2' and transmitted through an optical fibre Fa undergoes intensity modulation without increasing the spectral width of the light signal. A measuring light signal L2 sent out from the external modulator 8 and transmitted through an optical fibre Fb is divided into three light signals at an appropriate ratio by the optical divider 9. The laser for monitoring 10 serves so that the wavelength of the measuring light signal L1 emitted from the laser for measurement 2' is measured through optical heterodyne detection. The spectrum analyzer 11 serves to monitor the difference between the wavelength of the output light signal from the laser for measurement 2' and that of the output light signal from the laser for monitoring 10. The light wavelength meter 12 roughly measures the wavelength of the output light signal from the laser for measurement 2' to determine the wavelength of the output light signal from the laser for monitoring 10. An electrical reference signal Sb is supplied from the oscillator 1 to the phase comparator 6. An electrical intermediate frequency signal Sc is supplied from the light receiver 5c to the spectrum analyzer 11. A monitoring section 20, which is one of the features of the invention and performs the measurement based on the optical heterodyne detection, is composed of laser for monitoring 10, the optical multiplexer 13, the light receiver 5c and the spectrum analyzer 11. The laser for measurement 2' is the distributed feedback semicond uctor laser or the distributed reflector semiconductor laser, which is good in single longitudinal mode oscillation and narrow in spectral linewidth. Since the output light signal from the laser for measurement 2' is modulated by the external modulator 8, the spectral linewidth of the output light signal is not affected by the dispersion characteristics of the optical fibre 4. For that reason, the influence of the spectral spread of the output light signal from the laser 2' upon the measurement of the dispersion characteristics of the optical fibre 4 is reduced.

Although the laser for measurement 2' and the external modulator 8 are separately provided in the laser and the modulator may be integrated with each other.

The wavelength of the measuring light signal L1 emitted from the laser for measurement 2' is measured by the light wavelength meter 12. The driving electrical current or temperature of the laser for monitoring 10 of the monitoring section 20 is then controlled so that the difference between the wavelength of the output light signal from the laser and that of the output light signal Ll from the laser for measurement 2' is made small enough.

One of the measuring light signals L2 divided by the optical divider 9 and a monitoring light signal L0 emitted from the monitoring laser 10 are multiplexed with each other by the optical multiplexer 13 so that a beat signal L is generated from the signals L2 and L0. The beat signal L is photoelectrically converted into the electrical intermediate frequency signal Sc by the light receiver 5c. The signal Sc is observed by the spectrum analyzer 11. After that, the wavelength of the measuring light signal L1 from the laser for measurement 2' is gradually changed. The change in the wavelength of the signal L1 is observed by the spectrum analyzer 11 starting with the first wavelength of the signal. Besides, the output signal from the phase comparator 6 is measured. As a result, the dispersion characteristics of the optical fiber 4 can be accurately measured with a high resoluton.

When the difference between the wavelength of the output light signal from the laser for measurement 2' and that of the output light signal from the monitoring laser 10 exceeds the measurement bandwidth of the light receiver 5c, it becomes impossible that the change in the wavelength of the output light signal from the laser for measurement 2', from the initial value of the wavelength, is measured. If the change is to be measured in such a case, the wavelength of the output light signal from the laser for monitoring 10 is caused to approach that of the output light signal from the laser for measurement 2' when the difference between both the wavelengths has become a certain value, so that the frequency of the electrical intermediate frequency signal Sc is lowered, then measuring the change. By repeating such a process, the dispersion characteristics of the optical fibre 4 can be accurately measured with a high resolution in a wide range.

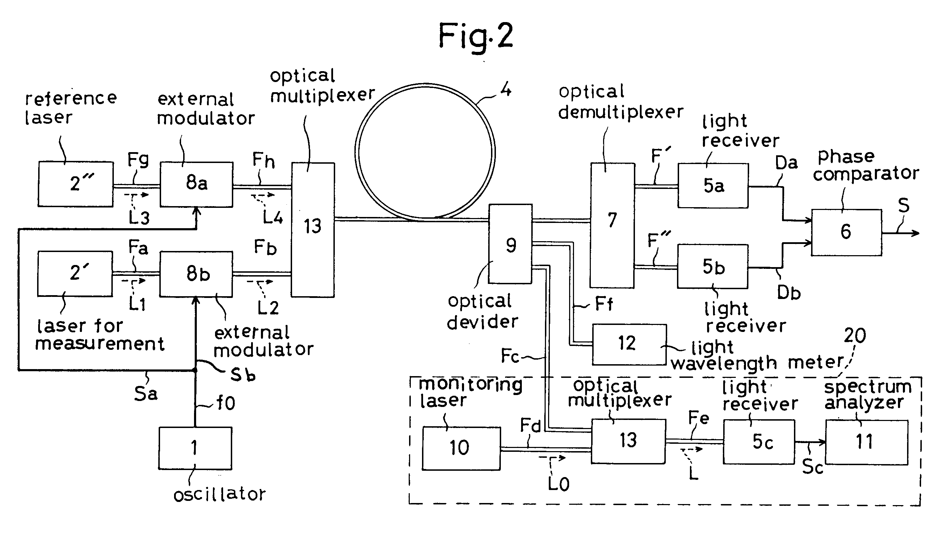

FIG. 2 shows a block diagram of apparatus measuring the dispersion characteristics of an optical fibre 4. The apparatus is the other of the embodiments. Since a reference laser is not provided in the preceding embodiment, the expansion and contraction of the optical fibre 4 cannot be prevented from affecting the result of the measurement of the dispersion characteristics of the fibre 4, for the above-mentioned reason. In the apparatus shown in FIG.2, a reference light signal obtained on the basis of the output light signal L3 from a laser for reference 2'' is transmitted through the optical fibre 4, and a monitoring section 20 employing optical heterodyne detection is provided at the signal reception end of the fibre 4 so as to perform measurement at the far end. The reference light signal L3 from the laser for reference 2'' and the measuring light signal L1 from a laser for measurement 2' are modulated into a reference light signal L4 and a measuring light signal L2 by external modulators 8a and 8b, respectively as same as the conventional art Fig 4. An optical demultiplexer 7 and light receivers 5a and 5b are used to obtain demodulated signals Da and Db. Other optical fibers Fg and Fh are provided.

In the apparatus shown in FIG. 2, the output light signal L3 from the laser for reference 2'' is subjected to external modulation by the external modulator 8a. However, since the wavelength of the output light signal 13 from the laser for reference 2'' is near the zero-dispersion wavelength of the optical fibre 4, which is 1.3 µ m, the signal does not necessarily need to be subjected to the external modulation but may be subjected to direct modulation. In contrast with that, the output light signal L1 from the laser for measurement 2' needs to be subjected to external modulation by the extermal modulator 8b, because the wavelength of the signal L1 is near the lowloss wavelength of the fibre 4, which is 1.55 µ m.

Thus, the present invention is possible to control oscillation wavelength as a measuring light source and use narrow spectral linewidth laser of a distributed feedback semiconductor laser or a distributed reflector semiconductor laser having the property of single longitudinal mode oscillation. By employing an external modulation for light intensity modulation, it is possible to make light occupying narrow bandwidth for the measurement. Futhermore, by means optical heterodyne detection as monitoring means of oscillating wavelength, the dispersion characteristics of the optical fibre can be accurately measured with the high resolution.

Accordingly, the present invention is able to adapt widely in designing the dispersion compensation circuit for coherent optical communication. So the effect will bring very large merits.

## Claims

1. Apparatus for measuring dispersion characteristics of an optical fibre (4) comprising;
a laser (2') for supplying a measuring light signal (L1) of variable wavelength,
an oscillator (1),
an external modulator (8) for modulating said measuring light signal (L1) in accordance with an output signal of the oscillator (1),
an optical divider (9) for dividing the modulated measuring light signal (L2) into first, second and third modulated light signals,
a first light receiver (5) for in use receiving the first modulated light signal via the optical fibre (4) and for converting the received signal into a measuring electrical signal (D),
a phase comparator (6) for measuring the phase difference between the output signal of the oscillator and said measuring electrical signal (D),
a light wavelength meter (12) for measuring the wavelength of the second modulated light signal,
a monitoring laser (10) for supplying a monitoring light signal (LO),
an optical multiplexer (13) for multiplexing the third modulated light signal and said monitoring light signal (LO) to produce a beat signal (L),
a second light receiver (5c) for receiving said beat signal (L) and for converting the beat signal (L) into an electrical intermediate frequency signal (Sc), said optical multiplexer (13) and said second light receiver (5c) being operated for optical heterodyne detection, and
a spectrum analyzer (11) for observing said electrical intermediate frequency signal (Sc).

2. Apparatus for measuring dispersion characteristics of an optical fibre (4) comprising;
a first laser (2') for supplying a measuring light signal (L1) of variable wavelength,
an oscillator (1),
an external modulator (8b) for modulating said measuring light signal (L1) in accordance with an output signal of the oscillator (1),
a second laser (2'') for supplying a reference light signal (L3),
means for modulating said reference light signal (L3),
a first optical multiplexer (13) for multiplexing said modulated measuring light signal (L2) and said modulated reference light signal (L4),
an optical divider (9) for in use receiving said multiplexed light signal via the optical fibre (4) and for dividing said multiplexed light signal into first, second and third multiplexed light signals,
an optical demultiplexer (7) and first and second light receivers (5a and 5b) for obtaining a reference electrical signal (Da) and a measuring electrical signal (Db) from the first multiplexed light signal,
a phase comparator (6) for measuring the phase difference between the electrical signals (Da and Db),
a light wavelength meter (12) for measuring the wavelength of the second multiplexed light signal,
a monitoring laser (10) for supplying a monitor light signal (LO),
an optical multiplexer (13) for multiplexing the third multiplexed light signal and said monitoring light signal (LO) to produce a beat signal (L),
a third light receiver (5c) for receiving said beat signal (L) and for converting said beat signal (L) into an electrical intermediate frequency signal (Sc), said optical multiplexer (13) and said second light receiver (5c) being operated for optical heterodyne detection, and
a spectrum analyzer (11) for observing said electrical intermediate frequency signal (Sc).

3. Measuring apparatus according to claim 2, wherein said means for modulating said reference light signal (L3) comprises a further external modulator (8a) for modulating said reference light signal in response to an output signal of the oscillator (1).

4. Measuring apparatus according to claim 2, wherein the output signal of the second laser (2'') is modulated by modulation applied directly to the second laser.

## Patentansprüche

1. Vorrichtung zur Messung der Dispersionseigenschaften einer optischen Faser (4), mit:
einem Laser (2') zum Zuführen eines Messlichtsignals (L1) veränderlicher Wellenlänge,
einem Oszillator (1),
einem externen Modulator (8) zum Modulieren des Messlichtsignals (L1) in Uebereinstimmung mit einem Ausgangssignal des Oszillators (1),
einem optischer Teiler (9) zum Teilen des modulierten Messlichtsignals (L2) in erste, zweite und dritte modulierte Lichtsignale,
einem ersten Lichtempfänger (5), um im Betrieb das erste modulierte Lichtsignal über die optische Faser (4) zu empfangen und das empfangene Signal in ein elektrisches Messignal (D) umzuwandeln,
einem Phasenvergleicher (6) zum Messen der Phasendifferenz zwischen dem Ausgangssignal des Oszillators und dem elektrischen Messignal (D),
einem Lichtwellenlängenmeter (12) zur Messung der Wellenlänge des zweiten modulierten Lichtsignals,
einem Ueberwachungslaser (10) zum Bereitstellen eines Ueberwachungslichtsignals (L0),
einem optischen Multiplexer (13) zum Multiplexen des dritten modulierten Lichtsignals und des Ueberwachungslichtsignals (L0) zum Erzeugen eines Schwebungssignals (L),
einem zweiten Lichtempfänger (5c) zum Empfangen des Schwebungssignals (L) und zum Umwandeln des Schwebungssignals (L) in ein elektrisches Zwischenfrequenzsignal (Sc), wobei der optische Multiplexer (13) und der zweite Lichtempfänger (5c) zum optischen Ueberlagerungsempfang betrieben werden, und
einem Spektrumanalysator (11) zur Beobachtung des elektrischen Zwischenfrequenzsignals (Sc).

2. Vorrichtung zur Messung der Dispersionseigenschaften einer optischen Faser (4), mit:
einem Laser (2') zum Zuführen eines Messlichtsignals (L1) veränderlicher Wellenlänge,
einem Oszillator (1),
einem externen Modulator (8b) zum Modulieren des Messlichtsignals (L1) in Uebereinstimmung mit einem Ausgangssignal des Oszillators (1),
einem zweiten Laser (2'') zum Zuführen eines Bezugslichtsignals (L3),
einer Einrichtung zum Modulieren des Bezugslichtsignals (L3),
einem ersten optischen Multiplexer (13) zum Multiplexieren des modulierten Lichtmessignals (L2) mit dem modulierten Bezugslichtsignal (L4),
einem optischer Teiler (9), um bei Betrieb das Multiplexlichtsignal über die optischer Faser (4) zu empfangen und zum Teilen des Multiplexlichtsignals in erste, zweite und dritte Multiplexlichtsignale,
einem optischen Demultiplexer (7) und einem ersten und zweiten Lichtempfänger (5a und 5b), um ein elektrisches Bezugssignal (Da) und ein elektrisches Messignal (Db) aus dem ersten Multiplexlichtsignal zu erhalten,
einem Phasenvergleicher (6) zum Messen der Phasendifferenz zwischen den elektrischen Signalen (Da und Db),
ein Lichtwellenlängenmeter (12) zur Messung der Wellenlänge des zweiten modulierten Lichtsignals,
ein Ueberwachungslaser (10) zum Bereitstellen eines Ueberwachungslichtsignals (L0),
einem optischen Multiplexer (13) zum Multiplexieren des dritten multiplexierten Lichtsignals und des Ueberwachungslichtsignals (L0) zum Erzeugen eines Schwebungssignals (L),
einem dritten Lichtempfänger (5c) zum Empfangen des Schwebungssignals (L) und zum Umwandeln des Schwebungssignals (L) in ein elektrisches Zwischenfrequenzsignal (Sc), wobei der optische Multiplexer (13) und der zweite Lichtempfänger (5c) zum optischen Ueberlagerungsempfang betrieben werden, und
einem Spektrumanalysator (11) zur Beobachtung des elektrischen Zwischenfrequenzsignals (Sc).

3. Vorrichtung zur Messung nach Anspruch 2, bei welcher die Einrichtung zum Modulieren des Bezugslichtsignals (L3) aus einem weiteren externen Modulator (8a) zur Modulierung des Bezugslichtsignals in Abhängigkeit von einem Ausgangssignal des Oszillators (1) bestehen.

4. Vorrichtung zur Messung nach Anspruch 2, bei welcher das Ausgangssignal des zweiten Lasers (2'') durch eine dem zweiten Laser direkt zugeführte Modulation moduliert wird.

## Revendications

1. Appareil pour mesurer les caractéristiques de dispersion d'une fibre optique (4) comprenant:
un laser (2') pour fournir un signal lumineux de mesure (L1) de longueur d'onde variable,
un oscillateur (1),
un modulateur externe (8) pour moduler ledit signal lumineux de mesure (L1) en accord avec un signal de sortie de l'oscillateur (1),
un diviseur optique (9) pour diviser le signal lumineux de mesure modulé (L2) en des premier, second et troisième signaux lumineux modulés,
un premier récepteur de lumière (5) pour recevoir en service le premier signal lumineux modulé via la fibre optique (4) et pour convertir le signal reçu en un signal de mesure électrique (D),
un comparateur de phase (6) pour mesurer la différence de phase entre le signal de sortie de l'oscillateur et le signal de mesure électrique (D),
un moyen de mesure (12) de la longueur d'onde de lumière pour mesurer la longueur d'onde du second signal lumineux modulé,
un laser de mesure (10) pour fournir un signal lumineux de mesure (L0),
un multiplexeur optique (13) pour multiplexer le troisième signal lumineux modulé et le signal lumineux de mesure (L0) pour produire un signal de battement (L),
un second récepteur de lumière (5c) pour recevoir ledit signal de battement (L) et pour convertir le signal de battement (L) en un signal électrique de fréquence intermédiaire (Sc), ledit multiplexeur optique (13) et ledit second récepteur de lumière (5c) fonctionnant pour la détection hétérodyne optique, et
un analyseur de spectre (11) pour observer ledit signal électrique de fréquence intermédiaire (Sc).

2. Appareil pour mesurer les caractéristiques de dispersion d'une fibre optique (4) comprenant:
un laser (2') pour fournir un signal lumineux de mesure (L1) de longueur d'onde variable,
un oscillateur (1),
un modulateur externe (8b) pour moduler ledit signal lumineux de mesure (L1) en accord avec un signal de sortie de l'oscillateur (1),
un second laser (2'') pour fournir un signal lumineux de référence (L3),
des moyens pour moduler ledit signal lumineux de référence (L3),
un premier multiplexeur optique (13) pour multiplexer ledit signal lumineux de mesure modulé (L2) et ledit signal lumineux de référence modulé (L4),
un diviseur optique (9) pour recevoir en service ledit signal lumineux multiplexé via la fibre optique (4) et pour diviser le signal lumineux multiplexé en des premier, second et troisième signaux lumineux multiplexés,
un démultiplexeur optique (7) et un premier et second récepteur de lumière (5a et 5b) pour obtenir un signal électrique de référence (Da) et un signal électrique de mesure (Db) du premier signal lumineux multiplexé,
un comparateur de phase (6) pour mesurer la différence de phase entre les signaux électriques (Da et Db),
un moyen de mesure (12) de la longueur d'onde de lumière pour mesurer la longueur d'onde du second signal lumineux multiplexé,
un laser de mesure (10) pour fournir un signal lumineux de mesure (L0),
un multiplexeur optique (13) pour multiplexer le troisième signal lumineux modulé et le signal lumineux de mesure (L0) pour produire un signal de battement (L),
un troisième récepteur de lumière (5c) pour recevoir ledit signal de battement (L) et pour convertir le signal de battement (L) en un signal électrique de fréquence intermédiaire (Sc), ledit multiplexeur optique (13) et ledit second récepteur de lumière (5c) fonctionnant pour la détection hétérodyne optique, et
un analyseur de spectre (11) pour observer ledit signal électrique de fréquence intermédiaire (Sc).

3. Appareil de mesure selon la revendication 2, dans lequel ledit moyen pour moduler ledit signal lumineux de référence (L3) comprend un modulateur externe supplémentaire (8a) pour moduler ledit signal lumineux de référence en réponse à un signal de sortie de l'oscillateur (1).

4. Appareil de mesure selon la revendication 2, dans lequel le signal de sortie du second laser (2'') est modulé par application directe d'une modulation au second laser.
